# EUROPÄISCHE PATENTSCHRIFT

(11) **EP 2 663 790 B1**
(45) Veröffentlichungstag und Bekanntmachung des Hinweises auf die Patenterteilung: **05.10.2016**
(21) Anmeldenummer: 11790782.4
(22) Anmeldetag: 01.12.2011
(51) Int. Cl.: F16J 10/04, C23C 4/02

(54) **VERFAHREN ZUM AUFRAUEN UND BESCHICHTEN EINER OBERFLÄCHE**
METHOD FOR ROUGHENING AND COATING A SURFACE
PROCÉDÉ POUR DÉPOLIR ET REVÊTIR UNE SURFACE

(30) Priorität: 12.01.2011 DE 102011002597
(43) Veröffentlichungstag der Anmeldung: 20.11.2013
(73) Patentinhaber: Ford Global Technologies, LLC, Dearborn, MI 48126 (US)
(72) Erfinder: SCHRAMM, Leander, 07407 Remda-Teichel (DE); VERPOORT, Clemens Maria, 40789 Monheim (DE); HAUSER, Enrico, 57520 Langenbach (DE); SCHWENK, Alexander, 5619 Wohlen (CH)
(74) Vertreter: Dörfler, Thomas
(86) Internationale Anmeldenummer: PCT/EP2011/071469
(87) Internationale Veröffentlichungsnummer: WO 2012/095215

(56) Entgegenhaltungen:
- EP-A1- 1 854 903
- EP-A2- 2 267 178
- WO-A1-02/40850
- DE-U1-202009 014 180

## Beschreibung

Die Erfindung betrifft ein Verfahren zum Aufrauen und Beschichten einer Oberfläche, insbesondere der Zylinderlauffläche einer Brennkraftmaschine, nach dem Oberbegriff des Anspruchs 1 sowie ein Werkstück hergestellt nach diesem Verfahren.

Bei Zylinderlaufflächen, die mittels eines thermischen Beschichtungsverfahrens erzeugt werden (siehe WO-A-02/40850), wird ein Großteil des Ölrückhaltevolumens durch die während des Honens freigelegten Poren übernommen. Es ist bekannt, das über die Zylinderlauffläche verteilt unterschiedliche Porositäten die tribologischen Eigenschaften im Betrieb des Motors verbessern können. Damit ist das benötigte Ölrückhaltevolumen über die Zylinderlaufflächelänge unterschiedlich. So wird an den Umkehrpunkten der Kolbenbewegung etwas mehr Ölrückhaltevolumen benötigt als zwischen diesen zwei Punkten. Speziell am oberen Umkehrpunkt ist das Risiko eines zusammenbrechenden Ölfilmes durch Einflüsse wie z.B. hohe thermische und mechanische Belastung gegeben.

Aus der FR 2924365 A1 ist es bekannt, eine Beschichtung durch eine thermisches Spritzverfahren so aufzubringen, dass über die Zylinderlauffläche unterschiedliche Porositäten entstehen, indem Spritzparameter während des Spritzens variiert werden, z. B. die Dauer und/oder die Geschwindigkeit des Spritzvorganges, die Vorwärmtemperatur, die Zusammensetzung des Spritzmaterials. Nachteilig ist, dass hier kein konstanter Spritzprozess gefahren werden kann, sondern abhängig von der jeweiligen Position des Spritzkopfs die Spritzparameter entsprechend eingestellt werden müssen.

Aufgabe der Erfindung ist es deshalb, ein Verfahren anzugeben, bei dem die Variation der Porosität und anderer Eigenschaften der Beschichtung über die Zylinderlauffläche auf einfache Weise erreicht werden kann, insbesondere ohne eine Änderung der Spritzparameter.

Gelöst wird diese Aufgabe mit den Merkmalen des Anspruchs 1.

Indem beim Aufrauen unterschiedliche Aufrauprofile in die Oberfläche eingebracht werden, kann beim späteren thermischen Beschichten das Beschichtungs- bzw. Spritzverfahren mit im Wesentlichen konstanten Spritzparametern durchgeführt werden. Die unterschiedlichen Eigenschaften der Beschichtung wie Härte, Porosität, Oxidation, Bearbeitbarkeit, chemische Zusammensetzung und Haftfestigkeit ergeben sich dann allein aufgrund der unterschiedlich aufgerauten Oberfläche.

Überraschend wurde festgestellt, dass je nach gewähltem Aufrauprofil die Eigenschaften der Beschichtung, insbesondere auch die Porosität, sich ändern. Wird ein erstes Aufrauprofil so verändert dass bei einem zweiten Aufrauprofil kleine Erhöhungen, z. B. Spitzen und/oder Deformationen entstehen, so baut sich die Spritzschicht bzw. Beschichtung auf den beiden Aufrauprofilen unterschiedlich auf. Durch die Spitzen und/oder Deformationen werden gezielt Punkte eingebracht an denen zum Beispiel Oxide bevorzugt wachsen. Das führt zu einer höheren Schichtporosität und somit höheren Ölrückhaltevolumina an den Stellen, wo in der Zylinderlauffläche das Aufrauprofil mit den Spitzen bzw. Deformationen zum Tragen kommt. Dabei müssen die Aufrauprofile nicht komplett unterschiedlich sein, die Makrostruktur der Aufrauprofile kann gleich bleiben, nur wird dem Aufrauprofil eine weitere Mikrostruktur mit Spitzen bzw. Deformationen aufgeprägt welche den Schichtaufbau gegenüber dem Schichtaufbau des unveränderten Aufrauprofils verändert.

Durch eine gezielte Änderung der Aufraustruktur in den entsprechenden Bereichen im Zylinderverlauf kann der Schichtaufbau und somit die Porosität bei gleichen Spritzparametern beeinflusst werden. D. h. es können ohne Umstellen bzw. Verändern des Beschichtungsprozesses während der Beschichtung eines Zylinders unterschiedliche Porositäten und somit Ölrückhaltevolumen an den gewünschten Stellen erzeugen.

Bevorzugt umfasst ein Aufrauprofil ein Grundprofil. Dieses Grundprofil bzw. die Makrostruktur kann für die gesamte Oberfläche, insbesondere der Zylinderlauffläche, gleich sein, indem z. B. eine konstante Drehnut in die Oberflächefläche eingebracht wird. Die unterschiedlichen Aufrauprofile ergeben sich dann über die Mikrostruktur, z. B. durch ein gezieltes Einbringen von zusätzlichen Deformationen in das Grundprofil. Eine Oberfläche kann auch verschiedene Grundprofile aufweisen, indem z. B. Form, Höhe, Breite und/oder Abstand des Grundprofils verändert wird, so dass über die Zylinderlauffläche gesehen verschiedene Grundprofile zum Einsatz kommen.

Vorteilhaft ist das Grundprofil als Schwalbenschwanzprofil, Rechteckprofil, Trapezprofil oder Sägezahnprofil ausgeführt. Solche Profile können direkt zum Beschichten verwendet werden, lassen sich aber auch leicht ändern, um die genannten Mikrostrukturen zu erzeugen. Die Form des Grundprofils ist nicht auf diese Profile beschränkt, vielmehr kann jeglicher andere Art von Grundprofil erzeugt werden, die bereits im Grundprofil und/oder oder durch weitere Bearbeitung die erforderlichen Hinterschnitte in der Oberfläche ergeben. Das Grundprofils kann durch diverse Verfahren erstellt werden, z. B. durch Fräsen, Drehen, Lasern usw.

Bevorzugt entsteht ein Aufrauprofil, indem in oder auf ein Grundprofil ein oder mehrere Unterprofile ein- oder aufgebracht werden. Dies kann entweder schon im ersten Arbeitsschritt, also wenn das Grundprofil entsteht, durchgeführt werden, indem z. B. ein Drehwerkzeug mit einer etwas anderen Schneidekante verwendet wird. Oder es kann separat eingebracht werden, indem gleichzeitig mit Entstehen des Grundprofils oder in einem zweiten Arbeitschritt im Bereich des besagten Aufrauprofils ein Werkzeug zur Anwendung kommt, das diese Unterprofile nachträglich aus dem Grundprofil formt. Dies kann sein eine Walze, mit der nachträglich das Grundprofil verformt wird. Oder es kann mittels einer oder mehrer kleiner Schneiden erfolgen, die im Bereich des Aufrauprofils mit dem Grundprofil im Eingriff sind und die Unterprofile entsprechend aus dem Grundprofil ausschneiden.

In einer vorteilhaften Ausführung ist ein Unterprofil als Sägezahnprofil ausgeformt. Dann wird in das Grundprofil ein oder mehrere Sägezahnprofile eingeformt. Damit können zum einen Hinterschnitte erzeugt werden, die gut für die Haftfestigkeit der Beschichtung sind. Zum anderen entstehen die Spitzen, die für eine Oxidbildung der Spritzschicht verantwortlich sind und somit eine porösere Beschichtung bewirken.

Bevorzugt entsteht ein Aufrauprofil, indem ein Grundprofil und/oder ein Unterprofil durch plastische Verformung oder Abtragung zumindest abschnittsweise weiter verformt wird bzw. werden. Dies kann erfolgen mittels Rändelung, Laserabtrag, Hammerschlagbürsten, Hochdruckwasserstrahlen, Sandstrahlen oder ähnlicher Verfahren. Z. B. kann ein Grundprofil mittels eines getakteten Laserstrahls gelöchert werden, wodurch ein anderes Aufrauprofil als das Grundprofil entsteht.

Bevorzugt findet das Verfahren Verwendung bei einem Zylinderblock einer Brennkraftmaschine, wobei es sich bei der Oberfläche um eine Zylinderlauffläche handelt. Aufgrund der einfachen Einbringung unterschiedlicher Aufrauprofile in eine Oberfläche vor dem Beschichten kann auf einfache Weise die unterschiedlich benötigte Porosität in der fertigen, beschichteten Zylinderlauffläche erzeugt werden.

In einer vorteilhaften Ausführung besteht ein Aufrauprofil im Bereich des oberen und/oder unteren Totpunktes eines in der Zylinderlauffläche gleitenden Kolbens aus einem Grundprofil mit einem oder mehreren aufgebrachten Unterprofilen. Durch diese Maßnahme wird auf einfache Weise erreicht, dass die Porosität der Zylinderlauffläche an den oberen bzw. unteren Totpunkten höher ist als im Bereich dazwischen. Durch eine einfache Bearbeitung des durchgehend auf der Oberfläche vorhandenen Grundprofils im Bereich der oberen und unteren Totpunkte durch Ein- oder Aufbringen der Unterprofile auf das Grundprofil weist die Beschichtung in diesen Bereichen die höhere Porosität auf.

In einer weiteren vorteilhaften Ausführung besteht ein Aufrauprofil im Bereich des oberen und/oder unteren Totpunktes eines in der Zylinderlauffläche gleitenden Kolbens aus einem Grundprofil oder einem Grundprofil mit einem oder mehreren aufgebrachten Unterprofilen, wobei das Grundprofil und/oder zumindest ein Unterprofil durch plastische Verformung oder Abtragung zumindest abschnittsweise weiter verformt wird bzw. werden. Im Prinzip wird die gleich Idee wie im Absatz vorher angewendet, allerdings erfolgt hier eine plastische Verformung oder mechanische Bearbeitung des Grundprofils und/oder eines darauf angebrachten Unterprofils, z. B. durch Rändeln, Hammerschlagbürsten, Laserbearbeitung etc.

Bevorzugt besteht ein Aufrauprofil im Bereich zwischen dem oberen und unteren Totpunkt eines in der Zylinderlauffläche gleitenden Kolbens aus einem Grundprofil. Im Bereich zwischen den Totpunkten wird das ohnehin vorhandene Grundprofil nicht weiter bearbeitet. Aufgrund der relativ kompakteren Form des Grundprofils mit wenig Verzweigungen erstarrt die Spritzschicht beim Auftragen der thermischen Beschichtung unter geringerer Oxidbildung, wodurch die Porosität in diesem Bereich geringer ist als in den Bereichen wie unter den beiden vorhergehenden Absätzen beschrieben.

Durch diese Verteilung von Grundprofilen und Unterprofilen bzw. verformten Grundprofilen kann auf einfache Weise die gewünschte unterschiedliche Porosität auf einer Zylinderlauffläche hergestellt werden. Beim Auftragen der thermischen Beschichtung können die Spritzparameter im Wesentlichen unverändert gelassen werden, die unterschiedlichen Eigenschaften auf Beschichtung ergeben sich im wesentlichen aufgrund der unterschiedlichen Aufrauprofile.

Weitere Vorteile und Ausführungen der Erfindung ergeben sich aus den Figuren. Es zeigen:
- Fig. 1:: einen Schnitt durch eine Zylinderlauffläche nach dem Aufrauen;
- Fig. 2a - d:: vergrößerte Schnitte der Einzelheiten A - D aus Fig. 1;
- Fig. 3:: einen Schnitt durch eine Zylinderlauffläche nach dem Beschichten; und
- Fig. 4a - d:: vergrößerte Schnitte der Einzelheiten A - D aus Fig. 3.

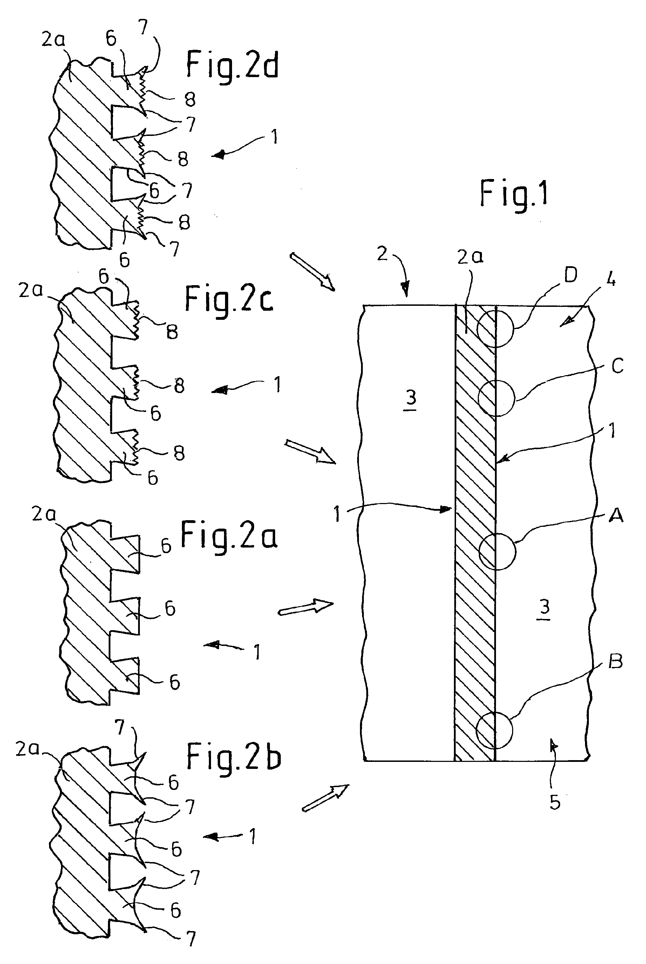

Fig. 1 zeigt einen Schnitt durch eine Zylinderlauffläche 1 eines Zylinderblocks 2 nach dem Aufrauen, wobei die Zylinderlauffläche 1 die Innenfläche einer Zylinderbohrung 3 ist. Die Zylinderlauffläche 1 weist einen Bereich des oberen Totpunktes 4 und einen Bereich des unteren Totpunktes 5 auf, wobei der Bereich eines Totpunktes der Bereich auf der Zylinderlauffläche 1 ist, der in der oberen und unteren Endlage eines - hier nicht dargestellten - Kolbens, in der der Kolben kurzfristig die Geschwindigkeit null erreicht, vom Kolben ganz oder zumindest teilweise überdeckt wird. Die vergrößerte Schnitte aus dem Zylinderblocksteg 2a der Einzelheiten A - D sind in den Fig. 2a - d dargestellt.

Fig. 2a zeigt den vergrößerten Ausschnitt A aus einem Bereich zwischen dem Bereich des oberen Totpunktes 4 und dem Bereich des unteren Totpunktes 5 . Die aufgeraute Zylinderlauffläche 1 weist als Aufrauprofil das trapezförmige Grundprofil 6 auf. Dieses kann in einem einfachen Dreh-, Fräs- oder Bohrvorgang aus dem Material des Zylinderblocks 2 gefertigt werden.

Fig. 2b zeigt den vergrößerten Ausschnitt B aus dem Bereich des unteren Totpunktes 5. Die aufgeraute Zylinderlauffläche 1 weist als Aufrauprofil das trapezförmige Grundprofil 6 auf, wobei das Grundprofil 6 zusätzlich die beiden sägezahnförmigen Unterprofile 7 aufweist. Die beiden Unterprofile 7 können z. B. durch eine Walzoperation aus dem Grundprofil 6 geformt sein.

Fig. 2c zeigt den vergrößerten Ausschnitt C aus dem unteren Bereich des oberen Totpunktes 4. Die aufgeraute Zylinderlauffläche 1 weist als Aufrauprofil das trapezförmige Grundprofil 6 auf, welches zusätzlich das fein gegliederte Sägezahnprofil 8 als Unterprofil aufweist, wobei das Sägezahnprofil 8 auf der Kopfflanke des Grundprofils 6 eingebracht ist. Das Sägezahnprofil 8 kann hergestellt werden, indem es vor dem Herstellen des Grundprofils 6 in die glatte Zylinderinnenwand mittels Feindrehens eingebracht wird. Nach Herstellung des Grundprofils 6 bleibt es auf der Kopfflanke des Grundprofils 6 stehen.

Fig. 2d schließlich zeigt den vergrößerten Ausschnitt D aus dem oberen Bereich des oberen Totpunktes 4, also dort wo bei einem Verbrennungsmotor die höchsten Belastungen auftreten. Die aufgeraute Zylinderlauffläche 1 weist als Aufrauprofil ebenfalls das trapezförmige Grundprofil 6 auf, das hier zusätzlich die beiden sägezahnförmigen Unterprofile 7 aus Fig. 2b und das fein gegliederte Sägezahnprofil 8 als weiteres Unterprofil, wie in Fig. 2c beschrieben, aufweist. Durch Anwendung der beiden verschiedenen Unterprofile 7, 8 weist das Aufrauprofil in diesem Bereich eine relativ viel größer Oberfläche als das Aufrauprofil aus Fig. 2a, bestehend nur aus dem Grundprofil 6.

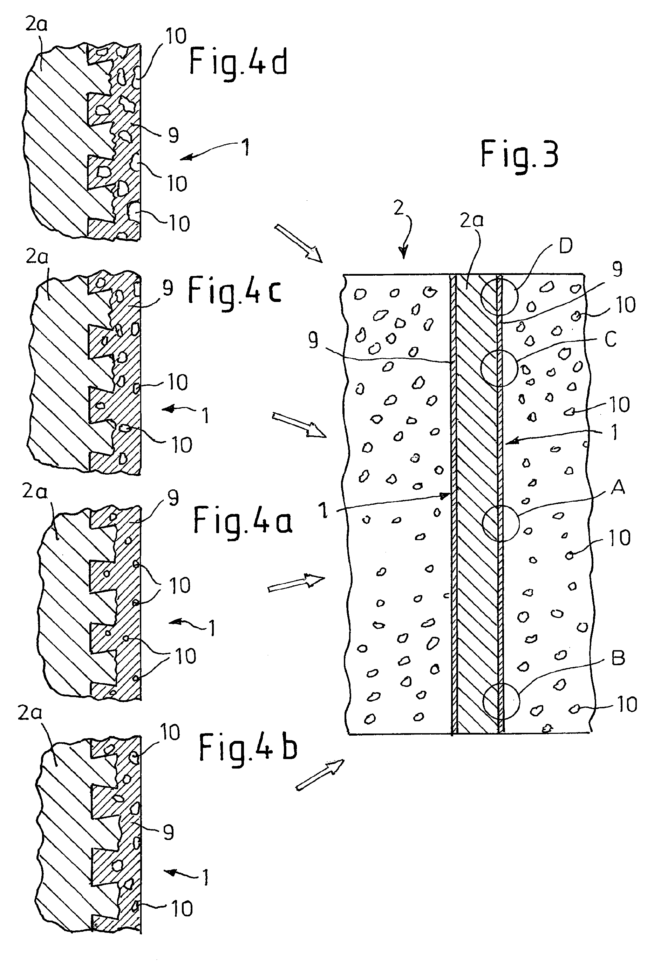

Fig. 3 zeigt den gleichen Schnitt zeigt einen Schnitt durch die Zylinderlauffläche 1 des Zylinderblocks 2 wie in Fig. 1, aber nach dem Beschichten der Zylinderlauffläche 1 mit der durch ein thermisches Spritzverfahren aufgetragenen Beschichtung 9.

Die vergrößerten Schnitte aus dem Zylinderblocksteg 2a der Einzelheiten A - D sind in den Fig. 4a - d dargestellt, analog zur Darstellung in den Fig. 2a - d. Aufgrund des thermischen Auftragens der Beschichtung 9, bei der sehr heißes Material auf die aufgeraute Oberfläche 1 aufgespritzt wird, werden die Aufrauprofile teilweise mit angeschmolzen, so dass die Aufrauprofile nach dem Auftragen der Beschichtung nicht mehr die Querschnittsform aufweisen wie vor dem Auftragen, d.h. wie nach dem Aufrauprozess. Von daher ist in der folgende Beschreibung, sofern Bezug auf die Form der Aufrauprofile genommen, immer die Ausgangsform der Aufrauprofile in den Figuren 2a - d zugrunde zu legen.

Fig. 4a zeigt wieder den vergrößerten Ausschnitt A aus einem Bereich zwischen dem Bereich des oberen Totpunktes 4 und dem Bereich des unteren Totpunktes 5, diesmal mit Beschichtung 9. Durch die glatte Form des Grundprofils 6 entsteht die Beschichtung 9 beim thermischen Spritzen ohne große Oxid- und Porenbildung. Die Poren 10 sind entsprechend klein, die Beschichtung 9 weist eine geringe Porosität auf. Da in diesem Bereich die Kolbegeschwindigkeit hoch ist, wirkt die geringe Porosität sich positiv auf den Ölverbrauch aus.

Im vergrößerten Ausschnitt B in Fig. 4b aus dem Bereich des unteren Totpunktes 5 zeigt die Beschichtung 9 gröbere bzw. größere Poren 10 als in Fig. 4a. Dies liegt an den beiden Unterprofile 7 (s. Fig. 2b), die beim thermischen Spritzen als Auslöser der Schichtbildung wirken, aufgrund der Hitze des Spritzmaterials weg schmelzen und so zu einer schneller Erstarrung des aufgespritzten Materials führen, unter beschleunigter Bildung von Oxiden und Poren in der Beschichtung 9.

Ähnlich wie in Fig. 4b verhält es sich mit Fig. 4c, wo der vergrößerte Ausschnitt C aus dem unteren Bereich des oberen Totpunktes 4 bezeigt ist. Das fein gegliederte Sägezahnprofil 8 (s. Fig. 2c) wirkt wieder als Auslöser für die Oxid- und Porenbildung in der Beschichtung 9. Die Poren sind etwas feiner bzw. kleiner als in Fig. 4b, aber gröber als in Fig. 4a.

In Fig. 4d, wo der vergrößerte Ausschnitt D aus dem oberen Bereich des oberen Totpunktes 4 dargestellt ist, sind deutlich die sehr groben und großen Poren zu erkennen, die aufgrund der relativ viel größer Oberfläche des Aufrauprofils in diesem Bereich während des Auftrags der Beschichtung 9 entstehen. Damit kann der Bereich des oberen Totpunktes 4 mit einer sehr porösen Beschichtung 9 versehen werden, die in idealer Weise eine Schmierung eines Kolbens auch dann noch aufrechterhält, wenn dessen Kolbengeschwindigkeit sehr klein und der Verbrennungsdruck sehr hoch ist.

## Patentansprüche

1. Verfahren zum Aufrauen und thermischen Beschichten einer Oberfläche (1) wobei das Aufrauen die Vorbereitung der Oberfläche (1) für das thermisches Beschichten der Oberfläche (1) mit einer Beschichtung (9) ist,
**dadurch gekennzeichnet, dass**
beim Aufrauen sich bereichsweise entlang der Höhe der Oberfläche (1) erstreckende unterschiedliche Aufrauprofile in die Oberfläche (1) eingebracht werden, wobei die Beschichtung (9) entsprechend der sich bereichsweise entlang der Höhe der Oberfläche (1) erstreckenden Aufrauprofile verteilt unterschiedliche Eigenschaften aufweist.

2. Verfahren nach Anspruch 1,
**dadurch gekennzeichnet, dass**
die unterschiedlichen Eigenschaften der Beschichtung (9) auf mindestens eine Eigenschaft der Gruppe Härte, Porosität, Bearbeitbarkeit, Oxidation, chemische Zusammensetzung und Haftfestigkeit der Beschichtung (9) zutreffen.

3. Verfahren nach Anspruch 1 oder 2,
**dadurch gekennzeichnet, dass**
ein Aufrauprofil ein Grundprofil (6) umfasst.

4. Verfahren nach Anspruch 3,
**dadurch gekennzeichnet, dass**
das Grundprofil als Schwalbenschwanzprofil, Rechteckprofil, Trapezprofil (6) Sägezahnprofil ausgeführt ist.

5. Verfahren nach Anspruch 3 oder 4,
**dadurch gekennzeichnet, dass**
ein Aufrauprofil entsteht, indem in oder auf ein Grundprofil (6) ein oder mehrere Unterprofile (7) ein- oder aufgebracht werden.

6. Verfahren nach Anspruch 5,
**dadurch gekennzeichnet, dass**
ein Unterprofil als Sägezahnprofil (8) ausgeformt ist.

7. Verfahren nach einem der Ansprüche 3 bis 6,
**dadurch gekennzeichnet, dass**
ein Aufrauprofil entsteht, indem ein Grundprofil und/oder ein Unterprofil durch plastische Verformung oder Abtragung zumindest abschnittsweise weiter verformt wird bzw. werden.

8. Werkstück, hergestellt nach einem der vorhergehenden Ansprüche.

9. Werkstück mit einer zur thermischen Beschichtung vorbereiteten Oberfläche (1), hergestellt nach einem Verfahren der vorhergehenden Ansprüche 1 bis 7, **dadurch gekennzeichnet, dass**
die Oberfläche (1) sich entlang der Höhe derselben bereichsweise erstreckende unterschiedliche Aufrauprofile aufweist.

10. Werkstück nach Anspruch 9,
**dadurch gekennzeichnet, dass**
die Aufrauprofile aus einem oder mehreren Grundprofilen bestehen, und zumindest ein Grundprofil für die unterschiedlichen Aufrauprofile je nach geforderten Eigenschaften bereichsweise verformt wird.

11. Werkstück nach Anspruch 9 oder 10,
**dadurch gekennzeichnet, dass**
das ein Aufrauprofil oder ein Grundprofil als Schwalbenschwanzprofil, Rechteckprofil, Trapezprofil (6) oder Sägezahnprofil ausgeführt ist.

12. Werkstück, nach Anspruch 10 oder 11,
**dadurch gekennzeichnet, dass**
auf ein Grundprofil (6) ganz oder abschnittsweise ein oder mehrere Unterprofile (7, 8) aufgebracht sind.

13. Werkstück, nach einem der Ansprüche 9 bis 12,
**dadurch gekennzeichnet, dass**
es sich bei dem Werkstück um einen Zylinderblock (2) einer Brennkraftmaschine und bei der Oberfläche um eine Zylinderlauffläche (1) handelt.

14. Werkstück, nach Anspruch 13,
**dadurch gekennzeichnet, dass**
ein Aufrauprofil im Bereich des oberen und/oder unteren Totpunktes (4, 5) eines in der Zylinderlauffläche (1) gleitenden Kolbens aus einem Grundprofil (6) mit einem oder mehreren aufgebrachten Unterprofilen (7, 8) besteht.

15. Werkstück, nach Anspruch 13,
**dadurch gekennzeichnet, dass**
ein Aufrauprofil im Bereich des oberen und/oder unteren Totpunktes eines in der Zylinderlauffläche gleitenden Kolbens aus einem Grundprofil oder einem Grundprofil mit einem oder mehreren aufgebrachten Unterprofilen besteht, und das Grundprofil und/oder zumindest ein Unterprofil durch plastische Verformung oder Abtragung zumindest abschnittsweise weiter verformt wird bzw. werden.

16. Werkstück, nach einem der Ansprüche 13 bis 15,
**dadurch gekennzeichnet, dass**
ein Aufrauprofil im Bereich zwischen dem oberen und unteren Totpunkt (4, 5) eines in der Zylinderlauffläche (1) gleitenden Kolbens aus einem Grundprofil (6) besteht.

## Claims

1. Method for roughening and thermally coating a surface (1), the roughening being the preparation of the surface (1) for the thermal coating of the surface (1) with a coating (9),
**characterized in that**
different roughening profiles extending in regions along the height of the surface (1) are introduced into the surface (1) during the roughening, wherein the coating (9) has different properties distributed in a way corresponding to the roughening profiles extending in regions along the height of the surface (1).

2. Method according to Claim 1,
**characterized in that**
the different properties of the coating (9) apply to at least one property of the group comprising hardness, porosity, machinability, oxidation, chemical composition and adhesion of the coating (9).

3. Method according to Claim 1 or 2,
**characterized in that**
a roughening profile comprises a basic profile (6).

4. Method according to Claim 3,
**characterized in that**
the basic profile is configured as a dovetail profile, rectangular profile, trapezoidal profile (6) sawtooth profile.

5. Method according to Claim 3 or 4,
**characterized in that**
a roughening profile is produced by one or more subprofiles (7) being introduced into or applied to a basic profile (6).

6. Method according to Claim 5,
**characterized in that**
a subprofile is formed as a sawtooth profile (8).

7. Method according to one of Claims 3 to 6, **characterized in that**
a roughening profile is produced by a basic profile and/or a subprofile being further shaped, at least in certain portions, by plastic deformation or removal.

8. Workpiece, produced according to one of the preceding claims.

9. Workpiece with a surface (1) prepared for thermal coating, produced by one of the methods of the preceding Claims 1 to 7,
**characterized in that**
the surface (1) has different roughening profiles extending in regions along the height of the same.

10. Workpiece according to Claim 9,
**characterized in that**
the roughening profiles consist of one or more basic profiles, and, for the different roughening profiles, at least one basic profile is deformed, in certain regions, according to the properties required.

11. Workpiece according to Claim 9 or 10,
**characterized in that**
the one roughening profile or a basic profile is configured as a dovetail profile, rectangular profile, trapezoidal profile (6) or sawtooth profile.

12. Workpiece according to Claim 10 or 11,
**characterized in that**
one or more subprofiles (7, 8) are applied to a basic profile (6) fully or in certain portions.

13. Workpiece according to one of Claims 9 to 12,
**characterized in that**
the workpiece is a cylinder block (2) of an internal combustion engine and the surface is a cylinder running surface (1).

14. Workpiece according to Claim 13,
**characterized in that**
a roughening profile in the region of the top and/or bottom dead center (4, 5) of a piston sliding in the cylinder running surface (1) consists of a basic profile (6) with one or more applied subprofiles (7, 8).

15. Workpiece according to Claim 13,
**characterized in that**
a roughening profile in the region of the top and/or bottom dead center of a piston sliding in the cylinder running surface consists of a basic profile or a basic profile with one or more applied subprofiles, and the basic profile and/or at least one subprofile is further shaped, at least in certain portions, by plastic deformation or removal.

16. Workpiece according to one of Claims 13 to 15,
**characterized in that**
the roughening profile in the region between the top and bottom dead centers (4, 5) of a piston sliding in the cylinder running surface (1) consists of a basic profile (6).

## Revendications

1. Procédé pour dépolir et revêtir thermiquement une surface (1), dans lequel le dépolissage est la préparation de la surface (1) pour le revêtement thermique de la surface (1) avec un revêtement (9), **caractérisé en ce que** lors du dépolissage on introduit dans la surface (1) des profils dépolis différents qui s'étendent partiellement le long de la hauteur de la surface (1), dans lequel le revêtement (9) présente des propriétés différentes réparties partiellement selon les profils dépolis s'étendant le long de la hauteur de la surface (1).

2. Procédé selon la revendication 1, **caractérisé en ce que** les propriétés différentes du revêtement (9) concernent au moins une propriété du groupe dureté, porosité, usinabilité, oxydation, composition chimique et adhérence du revêtement (9).

3. Procédé selon la revendication 1 ou 2, **caractérisé en ce qu'**un profil dépoli comprend un profil de base (6).

4. Procédé selon la revendication 3, **caractérisé en ce que** le profil de base est réalisé sous forme de profil en queue d'aronde, de profil rectangulaire, de profil trapézoïdal (6) profil en dents de scie.

5. Procédé selon la revendication 3 ou 4, **caractérisé en ce qu'**il résulte un profil dépoli, par le fait qu'un ou plusieurs sous-profil(s) (7) est/sont intégré(s) ou appliqué (s) dans ou sur un profil de base (6).

6. Procédé selon la revendication 5, **caractérisé en ce qu'**un sous-profil est un profil en forme de dents de scie (8).

7. Procédé selon l'une quelconque des revendications 3 à 6, **caractérisé en ce qu'**il résulte un profil dépoli, par le fait que l'on déforme en plus au moins partiellement un profil de base et/ou un sous-profil par une déformation plastique ou par un enlèvement de matière.

8. Pièce, fabriquée selon l'une quelconque des revendications précédentes.

9. Pièce avec une surface (1) préparée en vue d'un revêtement thermique, fabriquée selon un procédé des revendications précédentes 1 à 7, **caractérisée en ce que** la surface (1) présente des profils dépolis différents s'étendant partiellement le long de la hauteur de celle-ci.

10. Pièce selon la revendication 9, **caractérisée en ce que** les profils dépolis se composent d'un ou de plusieurs profil(s) de base, et au moins un profil de base est déformé partiellement pour les différents profils dépolis selon les propriétés demandées.

11. Pièce selon la revendication 9 ou 10, **caractérisée en ce qu'**un profil dépoli ou un profil de base est réalisé sous forme de profil en queue d'aronde, de profil rectangulaire, de profil trapézoïdal (6) ou de profil en dents de scie.

12. Pièce selon la revendication 10 ou 11, **caractérisée en ce qu'**un ou plusieurs sous-profil(s) (7, 8) est/sont réalisé(s) entièrement ou partiellement sur un profil de base (6).

13. Pièce selon l'une quelconque des revendications 9 à 12, **caractérisée en ce que** la pièce est un bloc-cylindres (2) d'un moteur à combustion interne et la surface est une surface d'alésage de cylindre (1).

14. Pièce selon la revendication 13, **caractérisée en ce qu'**un profil dépoli dans la région du point mort haut et/ou bas (4, 5) d'un piston glissant dans la surface d'alésage de cylindre (1) se compose d'un profil de base (6) avec un ou plusieurs sous-profil (s) appliqués (7, 8).

15. Pièce selon la revendication 13, **caractérisée en ce qu'**un profil dépoli dans la région du point mort haut et/ou bas d'un piston glissant dans la surface d'alésage de cylindre se compose d'un profil de base ou d'un profil de base avec un ou plusieurs sous-profil(s) appliqué(s), et le profil de base et/ou au moins un sous-profil est/sont formé(s) en plus au moins partiellement par une déformation plastique ou par un enlèvement de matière.

16. Pièce selon l'une quelconque des revendications 13 à 15, **caractérisée en ce qu'**un profil dépoli dans la région située entre le point mort haut et le point mort bas (4, 5) d'un piston glissant dans la surface d'alésage de cylindre (1) se compose d'un profil de base (6).
